# EUROPÄISCHE PATENTSCHRIFT

(11) **EP 3 268 158 B1**
(45) Veröffentlichungstag und Bekanntmachung des Hinweises auf die Patenterteilung: **09.01.2019**
(21) Anmeldenummer: 16714756.0
(22) Anmeldetag: 11.03.2016
(51) Int. Cl.: B23B 31/30, B23Q 1/00

(54) **SPANNEINRICHTUNG**
CLAMPING DEVICE
MANDRIN

(30) Priorität: 13.03.2015 DE 102015103737
(43) Veröffentlichungstag der Anmeldung: 17.01.2018
(73) Patentinhaber: Schunk GmbH & Co. KG Spann- und Greiftechnik, 74348 Lauffen (DE)
(72) Erfinder: WIEDMANN, Moritz, 74348 Lauffen am Neckar (DE); FEIN, Klaus, 74363 Frauenzimmern (DE); GROSS, Johann, 74081 Heilbronn (DE); TROßBACH, Robert, 74366 Brackenheim (DE)
(74) Vertreter: Albrecht, Ralf
(86) Internationale Anmeldenummer: PCT/EP2016/000443
(87) Internationale Veröffentlichungsnummer: WO 2016/146248

(56) Entgegenhaltungen:
- EP-A1- 2 676 767
- DE-A1-102009 024 481
- DE-A1-102010 032 284
- DE-A1-102011 053 651
- US-A1- 2005 044 686

## Beschreibung

Die Erfindung betrifft eine Spanneinrichtung gemäß dem Oberbegriff des Anspruchs 1. Ein Beispiel für eine solche Spanneinrichtung zeigt die DE 10 2011 053651 A1.

Spanneinrichtungen dieser Art sind bekannt und werden insbesondere eingesetzt, um Bauteile an einem Arbeitstisch oder an der Arbeitsspindel einer Werkzeugmaschine hydraulisch zu spannen. Derartige Dehnspanneinrichtungen besitzen in der Regel eine Dehnbüchse, die in einen Grundkörper eingesetzt ist und eine zentrale Aufnahme für ein zu spannendes Bauteil definiert. Für das Spannen des Bauteils wird die Dehnbüchse elastisch nach innen verformt, indem ein die Dehnbüchse umgebender Druckraum mit einem Hydraulikmittel beaufschlagt wird. Hierzu mündet in die Druckkammer ein Hydraulikmittelkanal, der an seiner von der Druckkammer fernen Seite als ein Zylinderraum ausgebildet ist, welcher durch eine Spannschraube verschlossen ist. Die Spannschraube ist mit einem in dem Hydraulikmittelkanal verschiebbar angeordneten Schaltkolben verbunden, so dass der Schaltkolben durch Drehung der Spannschraube unter Erhöhung des Drucks in der Druckkammer und elastischer Verformung der Dehnbüchse nach innen verschiebbar ist.

Derartige hydraulische Spanneinrichtungen haben sich in der Praxis durchaus bewährt. Allerdings wird die Betätigung zum Teil als aufwändig erachtet, insbesondere wenn sie automatisiert erfolgen soll, da hierzu ein Drehwerkzeug mit der Spannschraube in Eingriff gebracht werden muss, was nur bei einer exakten Ausrichtung von Spannschraube und Drehwerkzeug möglich ist.

Vor diesem Hintergrund liegt der vorliegenden Erfindung die Aufgabe zugrunde, eine Spanneinrichtung der eingangs genannten Art so auszugestalten, dass insbesondere eine automatische Betätigung vereinfacht wird.

Diese Aufgabe ist bei einer Spanneinrichtung der eingangs genannten Art dadurch gelöst, dass die Sicherungsmittel eine Sicherungshülse umfassen, die in einem hinteren Abschnitt des Hydraulikmittelkanals axialfest, aber um die Längsachse des Hydraulikmittelkanals verdrehbar gehalten ist, wobei die Sicherungshülse an ihrem vorderen Ende zwei auf gegenüberliegenden Seiten der Längsachse positionierte und sich in axialer Richtung erstreckende Führungsstege trägt, der Schaltkolben die Sicherungshülse axial durchgreift und einen radial vorstehenden Führungsabsatz besitzt, welcher in einer Führungsstellung der Sicherungshülse zwischen den Führungsstegen der Sicherungshülse axial verschiebbar geführt ist, wobei die axiale Länge der Führungsstege derart bemessen ist, dass der Führungsabsatz in der Betätigungsstellung des Schaltkolbens aus dem vorderen Ende der Sicherungshülse ragt, so dass die Sicherungshülse verdreht werden kann, und der Sicherungshülse Schaltmittel zugeordnet sind, um die Sicherungshülse in der Betätigungsstellung des Schaltkolbens um die Längsachse in eine Sicherungsstellung zu verdrehen, in der die Führungsstege den Führungsabsatz des Schaltkolbens hintergreifen und so den Schaltkolben in seiner Betätigungsstellung sichern.

Dabei kann zweckmäßigerweise der Führungsabsatz als Flansch ausgebildet sein, der an gegenüberliegenden Seiten der Längsachse Abflachungen aufweist, über welche der Schaltkolben zwischen den Führungsstegen der Sicherungshülse geführt ist, wobei in der Betätigungsstellung des Schaltkolbens die Führungsstege den Führungsabsatz in den zwischen den Abflachungen liegenden Bereichen hintergreifen.

Erfindungsgemäß ist somit in dem Hydraulikmittelkanal eine Sicherungshülse angeordnet, welche von dem Schaltkolben durchgriffen wird und in welcher der Schaltkolben axial verschiebbar geführt ist. Die Verbindung ist dabei drehfest ausgestaltet, so dass sich die Sicherungshülse gegenüber dem Schaltkolben, welcher drehfest in dem Grundkörper angeordnet ist, verdrehen kann. Die Anordnung ist dabei so getroffen, dass der Schaltkolben in seiner Betätigungsstellung so weit aus der Sicherungshülse herausgedrückt ist, dass der Führungsabsatz des Schaltkolbens außer Eingriff von den Führungsstegen der Sicherungshülse kommt und damit die Sicherungshülse verdreht werden kann. Auf diese Weise ist es in der Betätigungsstellung des Schaltkolbens möglich, die Sicherungshülse in eine Sicherungsstellung zu drehen, in welcher die Führungsstege der Sicherungshülse den Führungsabsatz und hier insbesondere dessen in Umfangsrichtung betrachtet zwischen den Abflachungen liegenden Bereiche hintergreifen, so dass der Schaltkolben in seiner Betätigungsstellung gesichert wird, oder aber entsprechend die Sicherungshülse in ihre Führungsstellung derart zu verdrehen, dass der Führungsabsatz des Schaltkolbens wieder in den in den Führungsstegen gebildeten Raum eintreten kann, um den Schaltkolben aus seiner Betätigungsstellung bzw. Spannstellung wieder zurück in eine Ausgangsstellung zu bringen.

Gemäß einer Ausführungsform der Erfindung ist vorgesehen, dass die Schaltmittel eine Kulissenhülse umfassen, die an dem Schaltkolben drehfest, aber axial verschiebbar geführt ist, wobei die Kulissenhülse mit der Sicherungshülse in der Weise gekoppelt ist, dass eine nach vorne gerichtete Axialbewegung der Kulissenhülse relativ zu dem Schaltkolben in eine Drehbewegung der Sicherungshülse aus ihrer Führungsstellung in ihre Sicherungsstellung oder umgekehrt umgesetzt wird, hingegen eine nach hinten gerichtete Axialbewegung der Kulissenhülse zu keiner Drehbewegung der Sicherungshülse führt. Diese Ausgestaltung ermöglicht es, die Sicherungshülse zu verdrehen, indem die Kulissenhülse axial aus einer hinteren Ausgangsstellung in eine vordere Stellung bewegt wird, wenn sich der Schaltkolben in seiner Betätigungsstellung befindet. In diesem Fall bewirkt die Koppelung zwischen der Kulissenhülse und der Schalthülse eine Umsetzung der Axialbewegung der Kulissenhülse in eine Drehbewegung der Schalthülse um einen vorbestimmten Drehwinkel.

In Weiterbildung der Erfindung kann zur Koppelung der Kulissenhülse mit der Sicherungshülse wenigstens ein Führungsstift vorgesehen sein, welcher die Wandung der Sicherungshülse radial durchsetzt und in eine in der Außenwandung der Kulissenhülse vorgesehene Führungsnut eingreift. Vorzugsweise sind zwei Führungsstifte vorgesehen, die an diametral gegenüberliegenden Seiten der Führungshülse angeordnet sind und mit der Führungsnut in Eingriff stehen. Hierdurch wird eine gleichmäßige Krafteinleitung von der Kulissenhülse in die Schalthülse gewährleistet.

Zweckmäßigerweise erstreckt sich die Führungsnut entlang des gesamten Umfangs der Kulissenhülse und umfasst mehrere in Umfangsrichtung beabstandet zueinander angeordnete axiale Führungsnutabschnitte, die sich in axialer Richtung erstrecken, und dazwischen liegende schräge Führungsnutabschnitte, die jeweils mit dem hinteren Ende eines axialen Führungsabschnitts und dem vorderen Ende eines benachbarten axialen Führungsabschnitts über hintere und vordere Verbindungsbereiche verbunden sind, so dass die Führungsnut eine zickzackartige Struktur erhält. Dabei stehen die Führungsstifte in der hinteren Ausgangsstellung der Kulissenhülse mit den vorderen Verbindungsbereichen der Führungsnut und in der vorderen Endstellung der Kulissenhülse mit den hinteren Verbindungsbereichen der Führungsnut in Eingriff. Mit anderen Worten entspricht die axiale Länge der Führungsnut dem axialen Verstellweg der Kulissenhülse.

Bei der nach vorne gerichteten Bewegung der Kulissenhülse stehen dabei die Führungsstifte jeweils mit einem der schrägen Führungsnutabschnitte in Eingriff, um die gradlinige Bewegung der Kulissenhülse in einen Drehbewegung der Schalthülse umzusetzen. Wenn anschließend die Kulissenhülse wieder zurück in ihre Ausgangsstellung bewegt wird, stehen die Führungsstifte hingegen mit dem axialen Führungsabschnitt in Eingriff, so dass die Schalthülse nicht gedreht wird, sondern in ihrer vorhandenen Drehstellung verbleibt.

In bevorzugter Weise wird dabei die Kulissenhülse durch elastische Rückstellmittel, die sich zwischen dem Schaltkolben, insbesondere dem Führungsabsatz des Schaltkolbens, und der Kulissenhülse abstützen, in ihre hintere Endstellung, d.h. die Ausgangsstellung beaufschlagt, so dass die Kulissenhülse automatisch in ihre Ausgangsstellung zurückgeführt wird, wenn eine axiale Betätigungskraft reduziert oder aufgehoben wird.

Gemäß einer bevorzugten Ausführungsform der Erfindung ist vorgesehen, dass die axialen Führungsnutabschnitte der Führungsnut eine von dem zugeordneten hinteren Verbindungsbereich in Richtung des zugeordneten vorderen Verbindungsbereichs abnehmende Nuttiefe besitzen, die im Übergang zu den vorderen Verbindungsbereichen unter der Bildung einer Stufe zunimmt. Dabei können die schrägen Führungsnutabschnitte eine zumindest im Wesentlichen konstante Tiefe besitzen. Alternativ können die schrägen Führungsnutabschnitte der Führungsnut eine von dem zugeordneten vorderen Verbindungsbereich in Richtung des zugeordneten hinteren Verbindungsbereichs abnehmende Nuttiefe besitzen, die im Übergang zu den hinteren Verbindungsbereichen unter Bildung einer Stufe zunimmt. Bei dieser Ausgestaltung sind die vorderen Verbindungsbereiche zwischen den axialen und den schrägen Führungsnutabschnitten relativ tief ausgebildet, so dass eine Stufe hin zu den axialen Führungsnutabschnitten überwunden werden muss, damit die Führungsstifte, die in der hinteren Ausgangsstellung der Kulissenhülse mit den vorderen Verbindungsbereichen der Führungsnut in Eingriff stehen, in die axialen Führungsnutabschnitte eintreten können. Im Gegensatz dazu besitzen die schrägen Führungsnutabschnitte eine im Wesentlichen konstante Nuttiefe, die etwa der Tiefe der vorderen und hinteren Verbindungsbereichen entspricht, die gleich oder im Wesentlichen gleich ist. Auf diese Weise wird gewährleistet, dass die Führungsstifte mit den schrägen Führungsnutabschnitten in Eingriff kommen, wenn die Kulissenhülse aus ihrer Ausgangsstellung axial nach vorne gedrückt wird. Ein ungewollter Eingriff mit den axialen Führungsnutabschnitten wird dagegen durch die zwischen diesen axialen Führungsnutabschnitten und den vorderen Verbindungsbereichen gebildeten Stufen verhindert. Wenn alternativ die Tiefe der Führungsnutabschnitte in Richtung des hinteren Verbindungsbereichs abnimmt und somit eine Stufe zwischen den hinteren Verbindungsbereichen und den schrägen Führungsnutabschnitten gebildet wird, wird auch hier ein ungewollter Eingriff der Führungsstifte mit den schrägen Führungsnutabschnitten durch die Stufe verhindert, wenn die Kulissenhülse axial nach hinten gedrückt wird. Die Anordnung ist dabei zweckmäßigerweise so getroffen, dass ein stetiger oder im Wesentlichen stetiger Übergang zwischen den hinteren Verbindungsbereichen und den axialen Führungsnutabschnitten einerseits und zwischen den vorderen Verbindungsbereichen und den schrägen Führungsnutabschnitten andererseits besteht.

Die erfindungsgemäße Spanneinrichtung kann in einfacher Weise betätigt werden, indem zunächst der Schaltkolben nach vorne in seine Betätigungsstellung gedrückt wird und anschließend die Kulissenhülse axial nach vorne gedrückt wird, um die Sicherungshülse in ihre Sicherungsstellung zu verdrehen. Anschließend können die Spannkraft zur Betätigung des Schaltkolbens und die Druckkraft zur Betätigung der Kulissenhülse reduziert werden. Der Schaltkolben bleibt dann aufgrund der Sicherung durch die Sicherungshülse in seiner Schaltstellung, und die Kulissenhülse wird durch die Rückstellkraft der Rückstellfeder in ihre hintere Ausgangsstellung gebracht.

Wenn der Schaltkolben wieder in seine Ausgangslage zurückgebracht werden soll, wird die Kulissenhülse wieder axial nach vorne gedrückt, wodurch die Sicherungshülse in ihre Führungsstellung gebracht wird, so dass der Schaltkolben durch den Betriebsdruck in der Hydraulikmittelleitung wieder in seine Ausgangsstellung nach hinten gedrückt wird.

Zur Betätigung der Spanneinrichtung kann eine Betätigungseinrichtung vorsehen sein, die einen Kraftleitdorn umfasst, welcher mit dem hinteren Ende des Schaltkolbens ein Eingriff bringbar ist, um diesen axial nach vorne zu drücken, und einen Taktkolben aufweist, der an dem Kraftleitdorn verschiebbar gehalten ist und mit der Kulissenhülse axial in Eingriff bringbar ist, um diese axial nach vorne zu drücken, wenn sich der Schaltkolben in seiner vorderen Betätigungsstellung befindet. Dabei kann der Taktkolben hülsenförmig ausgebildet sein und von dem Kraftleitdorn durchgriffen werden.

Gemäß einer bevorzugten Ausführungsform sind zwischen dem Taktkolben und dem Kraftleitdorn elastische Druckmittel vorgesehen, welche den Taktkolben gegenüber dem Kraftleitdorn nach vorne drücken. In diesem Fall wird die Betätigungseinrichtung mit der Spanneinrichtung in Eingriff gebracht, indem der Kraftleitdorn axial in Kontakt mit dem Schaltkolben und der hülsenförmige Taktkolben in Eingriff mit der Kulissenhülse gebracht wird. Wenn nun der Kraftleitdorn axial nach vorne gedrückt wird, führt dies zu einer axialen Verstellung des Schaltkolbens. Die axiale Position des Taktkolbens bleibt hierbei unverändert, da der Taktkolben und der Kraftleitdorn relativ zueinander verschiebbar sind. Die elastischen Druckmittel werden jedoch während der Relativbewegung vorgespannt. Gleichzeitig wird die Rückstellfeder gespannt, welche den Schaltkolben in seine hintere Ausgangstellung drückt.

In der Betätigungsstellung sind die Kräfte, welche durch die Rückstellfeder und die elastischen Druckmittel auf die Kulissenhülse ausgeübt werden, so hoch, dass die Kulissenhülse axial nach vorne bewegt und durch den Eingriff der Führungsstifte mit der Führungsnut die Sicherungshülse um die Längsachse in ihre Sicherungsstellung gedreht wird. Wenn die Betätigungseinrichtung wieder abgezogen wird, wird die Kulissenhülse durch die Rückstellkraft der Rückstellfeder wieder in ihre hintere Ausgangsstellung zurückgebracht.

Die Erfindung wird nachfolgend anhand eines Ausführungsbeispiels unter Bezugnahme auf die beiliegende Zeichnung erläutert. In der Zeichnung zeigt
- Figur 1: eine Ausführungsform einer erfindungsgemäßen Spanneinrichtung im Längsschnitt,
- Figur 2: die Spanneinrichtung im Schnitt entlang der Linie B-B in Figur 1,
- Figur 3: die Spanneinrichtung im Schnitt entlang der Linie C-C in Figur 1,
- Figur 4: die Spanneinrichtung im Schnitt entlang der Linie D-D in Figur 1,

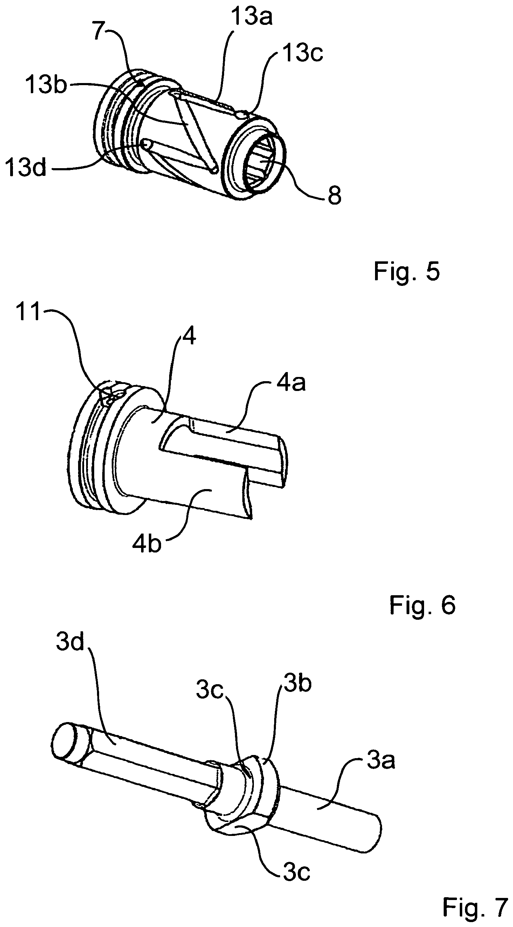

- Figur 5: eine Kulissenhülse der Spanneinrichtung aus Figur 1 in perspektivischer Ansicht,
- Figur 6: in perspektivischer Ansicht eine Sicherungshülse der Spanneinrichtung aus Figur 1,
- Figur 7: einen Schaltkolben der Spanneinrichtung gemäß Figur 1 in perspektivischer Ansicht,
- Figuren 8a bis 8i: zu der in Figur 1 korrespondierende Längsschnittansichten der erfindungsgemäßen Spanneinrichtung in verschiedenen Stufen während des Betätigungsvorgangs,
- Figuren 9a bis 9i: die Spanneinrichtungen der Figuren 8a bis 8i jeweils im Schnitt entlang der Linien B-B in den Figuren 8a, 8b und 8g und
- Figuren 10a bis 10i: die Spanneinrichtungen der Figuren 8a bis 8i jeweils im Schnitt der Linien C-C in den Figuren 8a, 8d und 8g

In der Zeichnung ist eine Spanneinrichtung gemäß der vorliegenden Erfindung dargestellt. Diese kann beispielsweise Teil einer hydraulischen Dehnspanneinrichtung sein.

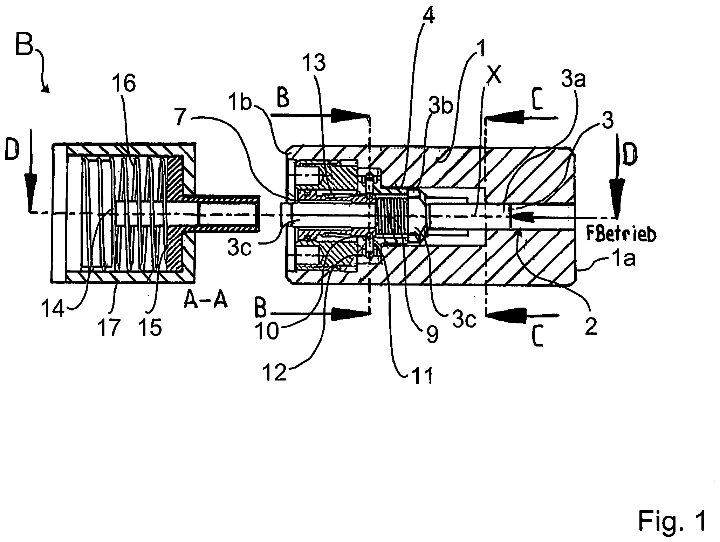

Die erfindungsgemäße Spanneinrichtung umfasst einen Grundkörper 1, in dem ein Hydraulikmittelkanal 2 ausgebildet ist, welcher den Grundkörper 1 axial zwischen dessen vorderer Stirnfläche 1a und dessen hinteren Stirnfläche 1b durchsetzt. Die Spanneinrichtung umfasst ferner einen Schaltkolben 3, der in dem Hydraulikmittelkanal 2 axial verschiebbar gehalten ist. Wie insbesondere die Figur 1 erkennen lässt, weist der Schaltkolben an seinem vorderen Ende einen zylindrischen Abschnitt 3a auf, welcher dichtend in den Hydraulikmittelkanal 2 eingesetzt ist.

Die erfindungsgemäße Spanneinrichtung umfasst weiterhin Sicherungsmittel, die dazu dienen, den Schaltkolben 3 in einer vorderen Betätigungsstellung zu sichern. Die Sicherungsmittel umfassen eine Sicherungshülse 4, die in einem hinteren Abschnitt des Hydraulikmittelkanals 2 axialfest aber um die Längsachse X des Hydraulikmittelkanals 2 verdrehbar gehalten ist. Konkret ist die Sicherungshülse 4 zwischen einer radialen Schulterfläche 5 des Grundkörpers 1 und einem Deckel 6, welcher in das hintere Ende des Hydraulikmittelkanals 2 eingeschraubt ist, axial positioniert. Die Sicherungshülse 4 weist an ihrem vorderen Ende zwei auf gegenüberliegenden Seiten der Längsachse X positionierte und sich in axialer Richtung erstreckende Führungsstege 4a, 4b auf.

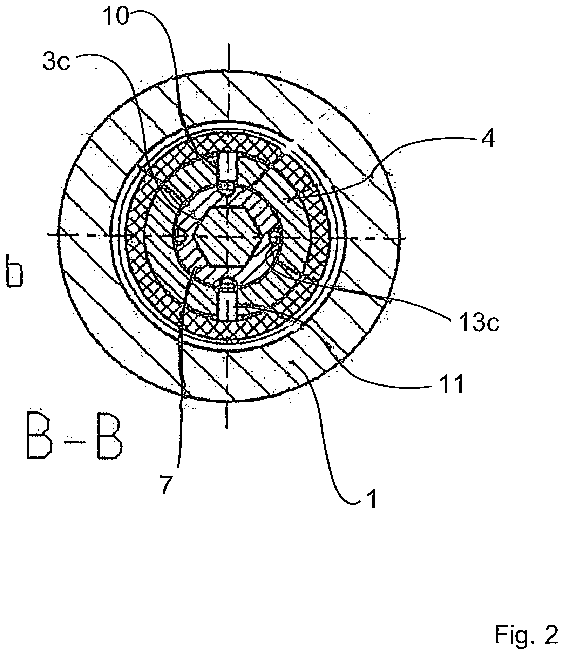

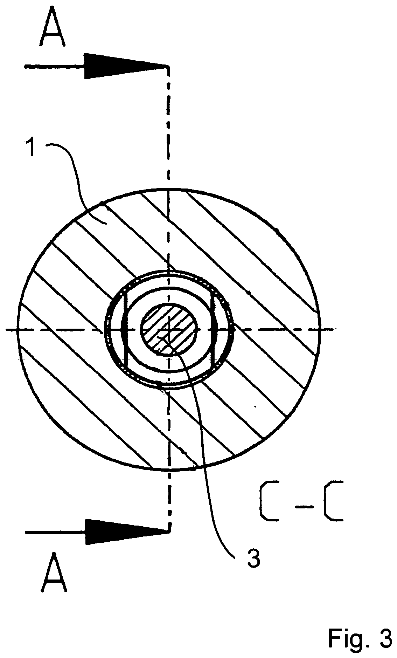

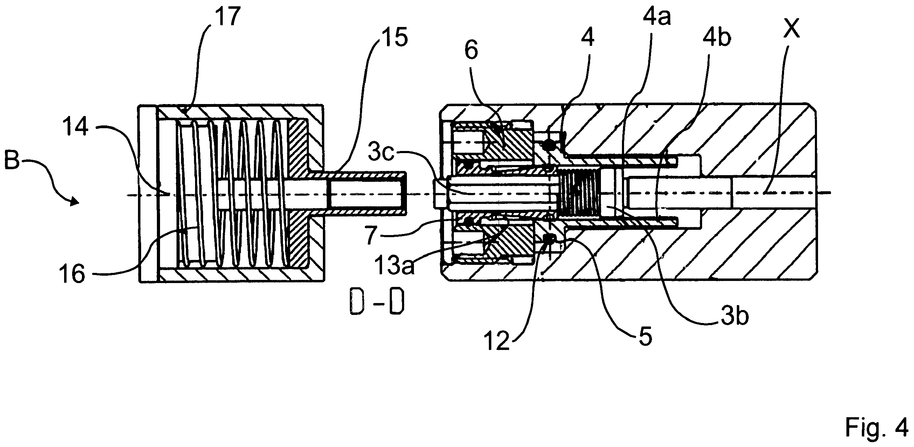

Der Schaltkolben 3 durchgreift die Sicherungshülse 4 axial und besitzt einen radial vorstehenden Führungsabsatz 3b, welcher in einer Führungsstellung der Sicherungshülse 4, die in den Figuren 1 bis 4 dargestellt ist, zwischen den Führungsstegen 4a, 4b der Sicherungshülse 4 axial verschiebbar geführt ist. Die axiale Länge der Führungsstege 4a, 4b ist derart bemessen, dass der Führungsabsatz 3b in der Betätigungsstellung des Schaltkolbens 3 aus dem vorderen Ende der Sicherungshülse 4 ragt, so dass die Sicherungshülse 4 verdreht werden kann.

In der Zeichnung gut erkennbar ist, dass der Führungsabsatz 3b als Flansch ausgebildet ist, der an zwei auf gegenüberliegenden Seiten der Längsachse positionierte Abflachungen 3c aufweist, über welche der Schaltkolben 3 zwischen den Führungsstegen 4a, 4b der Sicherungshülse 4 geführt ist. In der Sicherungsstellung der Sicherungshülse 4 hintergreifen die Führungsstege 4a, 4b den Führungsabsatz 3b in dessen zwischen den Abflachungen 3b gelegenen Bereichen.

Der Sicherungshülse 4 ist eine Kulissenhülse 7 zugeordnet, die an dem Schaltkolben 3 drehfest, aber axial verschiebbar geführt ist. Hierzu ist die Kulissenhülse 7 innenseitig mit einer Innensechskantfläche 8 versehen, und der damit in Eingriff stehende Abschnitt des Schaltkolbens 3 ist als Au-ßensechskantfläche 3d ausgebildet.

Die Kulissenhülse 7 wird durch elastische Rückstellmittel in Form einer Rückstellfeder 9, die sich zwischen dem flanschförmigen Führungsabsatz 3a des Schaltkolbens 3 und der Kulissenhülse 7 abstützt, in ihre hintere Endstellung beaufschlagt. Die Kulissenhülse 7 ist mit der Sicherungshülse 4 in der Weise gekoppelt, dass eine nach vorne gerichtete Axialbewegung der Kulissenhülse 7 relativ zu dem Schaltkolben 3 in eine Drehbewegung der Sicherungshülse 4 aus ihrer Führungsstellung in ihre Sicherungsstellung oder umgekehrt umgesetzt wird, hingegen eine nach hinten gerichtete Axialbewegung der Kulissenhülse 7 zu keiner Drehbewegung der Sicherungshülse 4 führt. Konkret erfolgt die Koppelung der Kulissenhülse 7 mit der Sicherungshülse 4 durch zwei Führungsstifte 10, in welche Bohrungen 11, die die Wandung der Sicherungshülse 4 radial durchsetzen, verschiebbar gehalten sind und durch einen elastischen O-Ring 12, welcher die Führungsstifte 10 umgreift, nach innen gedrückt werden. Die Führungsstifte 10 stehen mit einer Führungsnut 13 in Eingriff, welche in der Außenwandung der Kulissenhülse 7 ausgebildet ist. Diese Führungsnut 13 erstreckt sich entlang des gesamten Umfangs der Kulissenhülse 7 und umfasst mehrere - hier vier - in Umfangsrichtung gleichmäßig zueinander beabstandet angeordnete axiale Führungsnutabschnitte 13a, die sich in axialer Richtung erstrecken, und dazwischen liegende schräge Führungsnutabschnitte 13b, die jeweils mit dem hinteren Ende eines axialen Führungsabschnitts 13a und dem vorderen Ende eines benachbarten axialen Führungsabschnitts 13b über vordere und hintere Verbindungsbereiche 13c, 13d verbunden sind, so dass die Führungsnut 13 eine zickzackartige Struktur erhält. Die axiale Länge der Führungsnut 13 entspricht dabei dem Verstellweg der Kulissenhülse 7, so dass die Führungsstifte 10 in der hinteren Ausgangsstellung der Kulissenhülse 7 mit den vorderen Verbindungsbereichen 13c der Führungsnut 13 und in der vorderen Endstellung der Kulissenhülse 7 mit den hinteren Verbindungsbereichen 13d der Führungsnut 13 in Eingriff stehen.

Dabei besitzen die schrägen Führungsnutabschnitte 13b einschließlich der Verbindungsbereiche 13c, 13d eine zumindest im wesentlichen konstante Tiefe, während die axialen Führungsnutabschnitte 13a ausgehend von dem jeweils zugeordneten hinteren Verbindungsbereich 13d in Richtung des zugeordneten vorderen Verbindungsbereichs 13c eine abnehmende Nuttiefe aufweisen, so dass zwischen den axialen Führungsnutabschnitten 13a und den vorderen Verbindungsbereichen 13c eine radiale Stufe gebildet wird. Diese verhindert, dass die Führungsstifte 10 mit den axialen Führungsnutabschnitten 13a in Eingriff kommen, wenn die Kulissenhülse 7 aus ihrer Ausgangsstellung nach vorne gedrückt wird, sondern vielmehr die Führungsstifte 10 mit den schrägen Führungsnutabschnitten 13b in Eingriff kommen, so dass eine nach vorne gerichtete Axialbewegung der Kulissenhülse 7 durch den Eingriff der Führungsstifte 10 mit den schrägen Führungsnutabschnitten 13b in eine Drehbewegung der Sicherungshülse 4 um 90° umgesetzt wird.

Die schrägen Führungsnutabschnitte 13b können alternativ auch so ausgestaltet sein, dass ihre Nuttiefe von dem jeweils zugeordneten vorderen Verbindungsbereich 13c in Richtung des zugeordneten hinteren Verbindungsbereichs 13d abnimmt, so dass zwischen den schrägen Führungsnutabschnitten 13b und den hinteren Verbindungsbereichen 13d eine radiale Stufe gebildet wird. Diese verhindert, dass die Führungsstifte 10 mit den schrägen Führungsnutabschnitten 13b in Eingriff kommen, wenn die Kulissenhülse 7 aus ihrer vorderen Endstellung nach hinten gedrückt wird, sondern vielmehr die Führungsstifte 10 mit den axialen Führungsnutabschnitten 13a in Eingriff kommen. Die Anordnung ist dabei so getroffen, dass ein stetiger oder im Wesentlichen stetiger Übergang zwischen den hinteren Verbindungsbereichen 13d und den axialen Führungsnutabschnitten 13a einerseits und zwischen den vorderen Verbindungsbereichen 13c und den schrägen Führungsnutabschnitten 13b andererseits besteht.

Zu der Spanneinrichtung gehört ferner eine Betätigungseinrichtung B. Diese umfasst einen Kraftleitdorn 14, welcher mit dem hinteren Ende des Schaltkolbens 3 in Eingriff bringbar ist, um diesen axial nach vorne zu drücken, und weist ferner einen Taktkolben 15 auf, der hülsenförmig ausgebildet ist und von dem Kraftleitdorn 14 axial verschiebbar durchgriffen wird. Dabei sind zwischen dem Taktkolben 15 und dem Kraftleitdorn 14 elastische Druckmittel in Form einer Feder 16 vorgesehen, welche den Taktkolben 15 gegenüber dem Kraftleitdorn 14 nach vorne drücken. Wie in der Figur 1 erkennbar ist, umfasst die Betätigungseinrichtung B ein Gehäuse 17, welches mit dem Kraftleitdorn 14 verbunden ist und in welchem die Druckfeder 16 und der Taktkolben 15 gehalten sind. Der Kraftleitdorn 14 ist mit einer Druckvorrichtung einer automatischen Werkzeugwechseleinrichtung verbunden und kann über diese axial nach vorne bewegt werden.

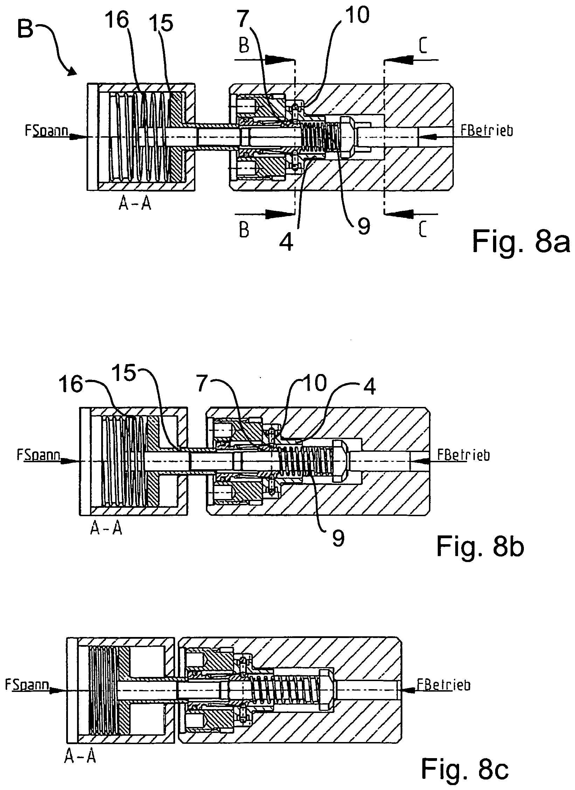

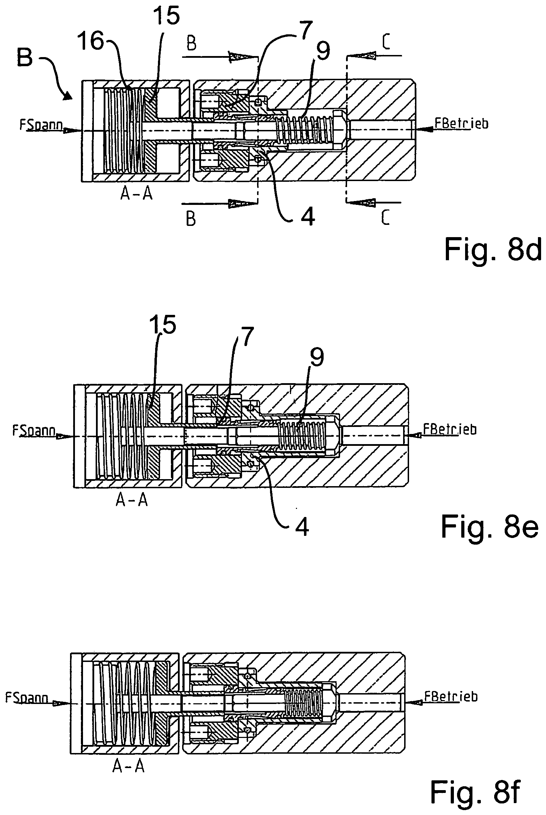

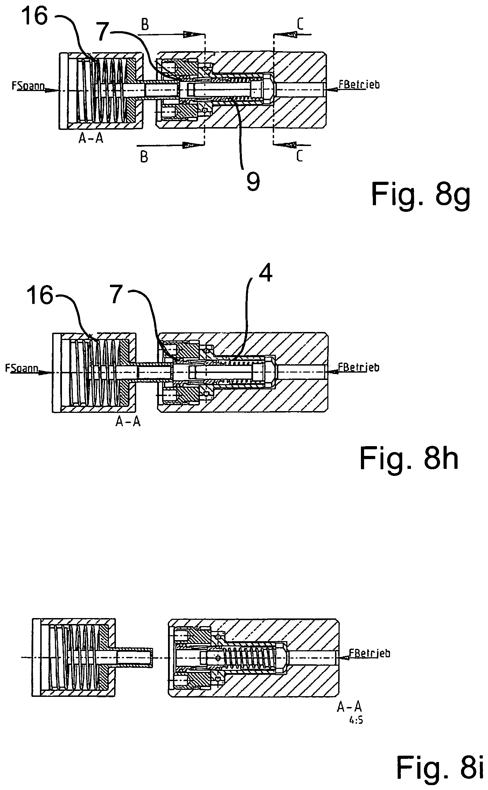

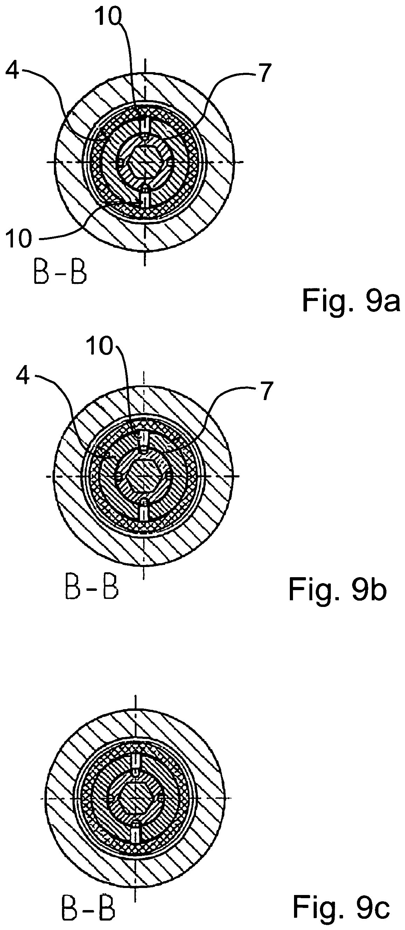

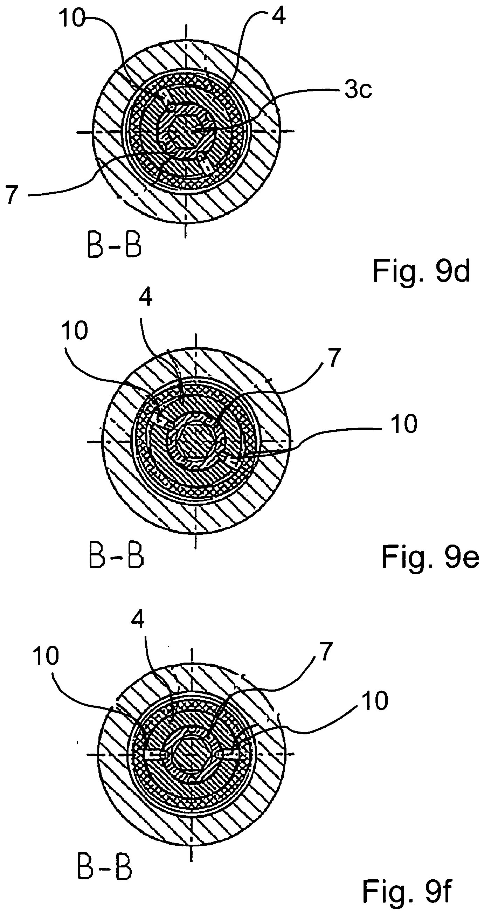

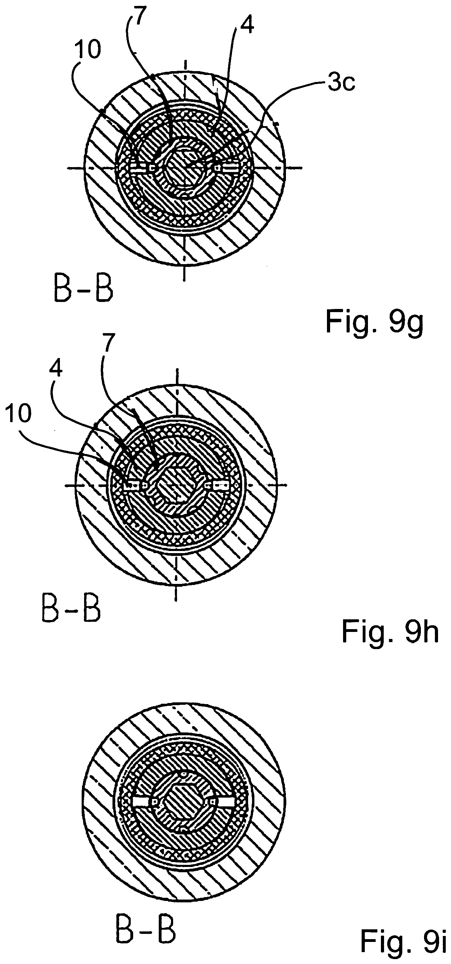

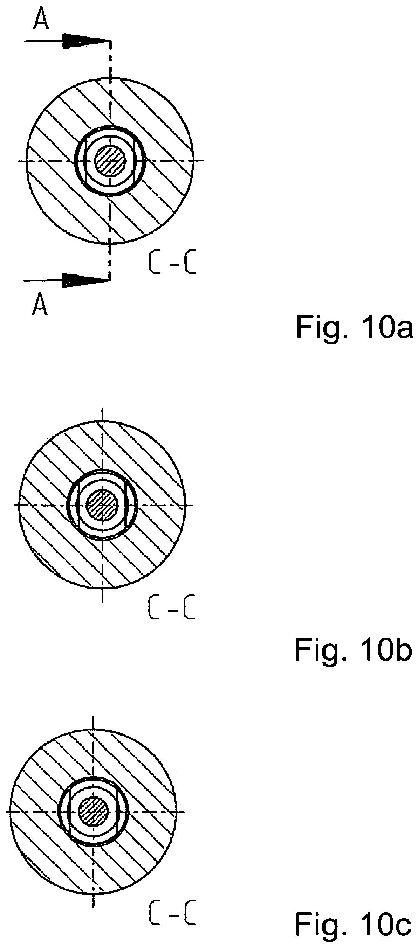

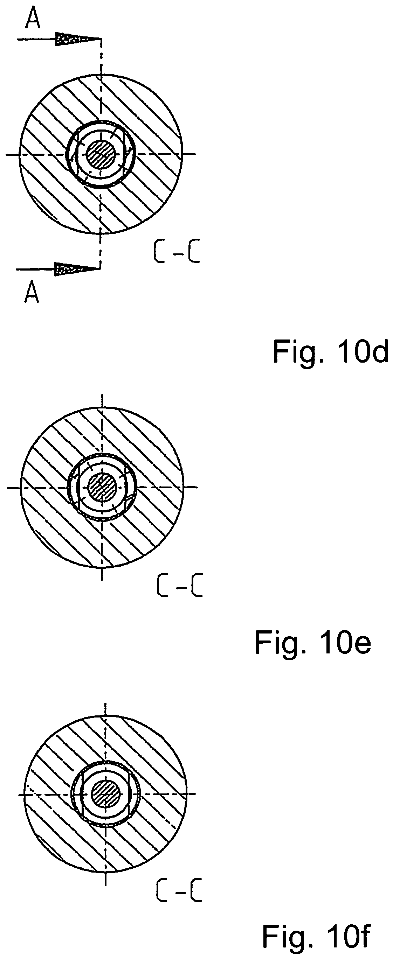

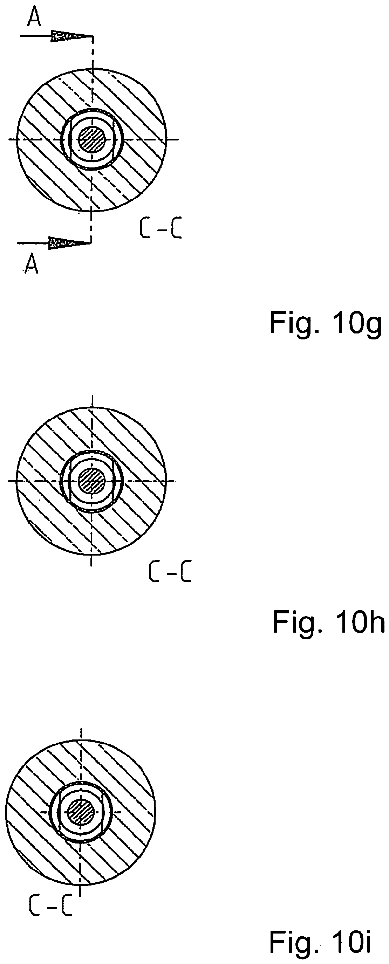

Um die Spanneinrichtung zu betätigen, wird die Betätigungseinrichtung B mit der Spanneinrichtung in Eingriff gebracht. Hierzu wird der Kraftleitdorn 14 an der hinteren Stirnfläche des Schaltkolbens 3 in Anlage gebracht, während die vordere Stirnfläche des Taktkolbens 15 an der hinteren Stirnfläche der Kulissenhülse 7 in Anlage gebracht wird, wie dies in der Figur 8a erkennbar ist. Wenn nun eine Spannkraft F_{Spann} auf die Betätigungseinrichtung B ausgeübt wird, wird der Kraftleitdorn 14 und zusammen mit diesem der Schaltkolben 3 nach vorne gedrückt, bis der Schaltkolben 3 seine vordere Endstellung - die Betätigungsstellung - einnimmt, in der er an einer radialen Schulterfläche des Grundkörpers 1 ein Anlage kommt. Die Verschiebung des Schaltkolbens 3 erfolgt entgegen des Hydraulikdruckes F_{Betrieb} in dem Hydraulikmittelkanal 2. Die Verschiebung des Schaltkolbens 3 in die Betätigungsstellung ist in den Figuren 8b und 8c sowie den zugehörigen Figuren 9b, 9c, 10b und 10c dargestellt.

Die axiale Position des Taktkolbens 15 bleibt hierbei unverändert, da der Taktkolben 15 und der Kraftleitdorn 14 relativ zueinander verschiebbar sind. Die elastischen Druckmittel 16 werden jedoch während der Relativbewegung vorgespannt. Gleichzeitig wird die Rückstellfeder 9 gespannt, welche den Schaltkolben 3 in seine hintere Ausgangstellung drückt.

In der Betätigungsstellung sind die Kräfte, welche durch die Rückstellfeder 9 und die elastischen Druckmittel 16 auf die Kulissenhülse 7 ausgeübt werden, so hoch, dass der Taktkolben 15 und die Kulissenhülse 7 axial nach vorne bewegt werden und dabei durch den Eingriff der Führungsstifte 10 mit den schrägen Führungsnutabschnitten 13b der Führungsnut 13 die Sicherungshülse 4 um die Längsachse um 90° in ihre Sicherungsstellung gedreht wird. Dieser Vorgang ist in den Figuren 8d bis 8f und den korrespondierenden Figuren 9d bis 9f und 10d bis 10f erkennbar.

Wenn die Betätigungseinrichtung B wieder abgezogen wird, wird die Kulissenhülse 7 durch die Rückstellkraft der Rückstellfeder 9 wieder in ihre hintere Ausgangsstellung zurückgebracht. Dabei kommen die Führungsstifte 10 mit den axialen Führungsnutabschnitten 13a der Führungsnut 13 der Kulissenhülse 7 in Eingriff, so dass die Drehstellung der Sicherungshülse 4 unverändert bleibt und damit die Sicherungshülse 4 in ihrer Sicherungsstellung bleibt.

Dieser Vorgang ist in den Figuren 8g bis 8i sowie den zugehörigen Figuren 9g bis 9i und 10g bis 10i dargestellt.

Um die Spanneinrichtung wieder zu lösen, wird der vorbeschriebene Vorgang wiederholt mit der Folge, dass die Sicherungshülse 4 aus ihrer Sicherungsstellung um 90° in ihre Freigabestellung gedreht wird.

### Bezugszeichenliste

- (1): Grundkörper
- (1a): Stirnfläche
- (1b): Stirnfläche
- (2): Hydraulikmittelkanal
- (3): Schaltkolben
- (3a): Führungsabsatz
- (3c): Abflachungen
- (3d): Schaltkolben
- (4): Sicherungshülse
- (4a): Führungsstege
- (4b): Führungsstege
- (5): Schulterfläche
- (6): Deckel
- (7): Kulissenhülse
- (8): Innensechskantfläche
- (9): Rückstellmittel
- (10): Führungsstift
- (11): Bohrungen
- (12): elastischer Ring
- (13): Führungsnut
- (13a): Führungsnutabschnitte
- (13b): Führungsnutabschnitt
- (13c): Verbindungsbereiche
- (13d): Verbindungsbereiche
- (14): Kraftleitdorn
- (15): Taktkolben
- (16): Druckmittel
- (F_{Spann}): Spannkraft
- (F_{Betrieb}): Hydraulikdruck
- (X): Längsachse

## Patentansprüche

1. Spanneinrichtung mit
einem Grundkörper (1), in dem ein Hydraulikmittelkanal (2) ausgebildet ist, der den Grundkörper (1) zwischen einer vorderen Stirnfläche (1a) und einer hinteren Stirnfläche (1b) axial durchsetzt,
einem Schaltkolben (3), der in den Hydraulikmittelkanal (2) axial verschiebbar eingesetzt ist, und
Sicherungsmitteln, um den Schaltkolben (3) in einer vorderen Betätigungsstellung zu sichern,
**dadurch gekennzeichnet, dass**
die Sicherungsmittel eine Sicherungshülse (4) umfassen, die in einem hinteren Abschnitt des Hydraulikmittelkanals (2) axialfest, aber um die Längsachse (X) des Hydraulikmittelkanals (2) verdrehbar gehalten ist, wobei die Sicherungshülse (4) an ihrem vorderen Ende zwei auf gegenüberliegenden Seiten der Längsachse (X) positionierte und sich in axialer Richtung erstreckende Führungsstege (4a, 4b) trägt,
der Schaltkolben (3) die Sicherungshülse (4) axial durchgreift und einen radial vorstehenden Führungsabsatz (3b) besitzt, welcher in einer Führungsstellung der Sicherungshülse (4) zwischen den Führungsstegen (4a, 4b) der Sicherungshülse axial verschiebbar geführt ist, wobei die axiale Länge der Führungsstege (4a, 4b) derart bemessen ist, dass der Führungsabsatz (3b) in der Betätigungsstellung des Schaltkolbens aus dem vorderen Ende der Sicherungshülse (4) ragt, so dass die Sicherungshülse (4) verdreht werden kann,und
der Sicherungshülse (4) Schaltmittel zugeordnet sind, um die Sicherungshülse (4) in der Betätigungsstellung des Schaltkolbens (3) um die Längsachse (X) in eine Sicherungsstellung zu verdrehen, in der die Führungsstege (4a, 4b) den Führungsabsatz (3b) des Schaltkolbens (3) hintergreifen und so den Schaltkolben (3) in seiner Betätigungsstellung sichern.

2. Spanneinrichtung nach Anspruch 1, **dadurch gekennzeichnet, dass** der Führungsabsatz (3b) als Flansch ausgebildet ist, der an gegenüberliegenden Seiten der Längsachse Abflachungen (3c) aufweist, über welche der Schaltkolben (3) zwischen den Führungsstegen (4a, 4b) der Sicherungshülse (4) geführt ist, und dass in der Sicherungsstellung der Sicherungshülse (4) die Führungsstege (4a, 4b) den Führungsabsatz (3b) in den zwischen den Abflachungen (3c) liegenden Bereichen hintergreifen.

3. Spanneinrichtung nach Anspruch 1 oder 2, **dadurch gekennzeichnet, dass** die Schaltmittel eine Kulissenhülse (7) umfassen, die an dem Schaltkolben (3) drehfest, aber axial verschiebbar geführt ist, wobei die Kulissenhülse (7) mit der Sicherungshülse (4) in der Weise gekoppelt ist, dass eine nach vorne gerichtete Axialbewegung der Kulissenhülse (7) relativ zu dem Schaltkolben (3) in eine Drehbewegung der Sicherungshülse (4) aus ihrer Führungsstellung in ihre Sicherungsstellung oder umgekehrt umgesetzt wird, hingegen eine nach hinten gerichtete Axialbewegung der Kulissenhülse (7) zu keiner Drehbewegung der Sicherungshülse (4) führt.

4. Spanneinrichtung nach Anspruch 3, **dadurch gekennzeichnet, dass** zur Koppelung der Kulissenhülse (7) mit der Sicherungshülse (4) wenigstens ein Führungsstift (10) vorgesehen ist, welcher die Wandung der Sicherungshülse (4) radial durchsetzt und in eine in der Außenwandung der Kulissenhülse (7) vorgesehene Führungsnut (13) eingreift.

5. Spanneinrichtung nach Anspruch 4, **dadurch gekennzeichnet, dass** die Führungsnut (13) sich entlang des gesamten Umfangs der Kulissenhülse (7) erstreckt und mehrere in Umfangsrichtung beabstandet zueinander angeordnete axiale Führungsnutabschnitte (13a), die sich in axialer Richtung erstrecken, und dazwischen liegende schräge Führungsnutabschnitte (13b), die jeweils mit dem hinteren Ende eines axialen Führungsabschnitts (13a) und dem vorderen Ende eines benachbarten axialen Führungsabschnitts (13b) über hintere und vordere Verbindungsbereiche (13d, 13c) verbunden sind, aufweist, so dass die Führungsnut (13) eine zickzackartige Struktur erhält.

6. Spanneinrichtung nach Anspruch 5, **dadurch gekennzeichnet, dass** die axialen Führungsnutabschnitte (13a) der Führungsnut (13) eine von dem zugeordneten hinteren Verbindungsbereich (13d) in Richtung des zugeordneten vorderen Verbindungsbereichs (13c) abnehmende Nuttiefe besitzen, die im Übergang zu den vorderen Verbindungsbereichen (13c) unter der Bildung einer Stufe zunimmt.

7. Spanneinrichtung nach Anspruch 6, **dadurch gekennzeichnet, dass** die schrägen Führungsnutabschnitte (13b) eine zumindest im Wesentlichen konstante Tiefe besitzen.

8. Spanneinrichtung nach Anspruch 6, **dadurch gekennzeichnet, dass** die schrägen Führungsnutabschnitt (13b) eine von dem zugeordneten vorderen Verbindungsbereich (13c) in Richtung des zugeordneten hinteren Verbindungsbereichs (13d) abnehmende Nuttiefe besitzen, die im Übergang zu den hinteren Verbindungsbereichen (13d) unter Bildung einer Stufe zunimmt.

9. Spanneinrichtung nach einem der Ansprüche 4 bis 8, **dadurch gekennzeichnet, dass** zwei Führungsstifte (10) vorgesehen sind, die an diametral gegenüberliegenden Seiten der Sicherungshülse (4) angeordnet sind und mit der Führungsnut (13) in Eingriff stehen.

10. Spanneinrichtung nach Anspruch 9, **dadurch gekennzeichnet, dass** die Führungsstifte (10) in radialen Bohrungen (11) der Sicherungshülse (4) axial verschiebbar gehalten sind und durch elastische Mittel, insbesondere einen elastischen Ring (12), welcher die Führungsstifte (10) umgreift, nach innen in Eingriff mit der Führungsnut (13) gedrückt werden.

11. Spanneinrichtung nach einem der Ansprüche 3 bis 10, **dadurch gekennzeichnet, dass** die Kulissenhülse (7) innenseitig eine Innensechskantfläche (8) aufweist und der damit in Eingriff stehende Abschnitt des Schaltkolbens (3d) als Außensechskantfläche ausgebildet ist.

12. Spanneinrichtung nach einem der Ansprüche 3 bis 11, **dadurch gekennzeichnet, dass** die Kulissenhülse (7) durch elastische Rückstellmittel (9), die sich zwischen dem Schaltkolben (3), insbesondere dem Führungsabsatz (3b) des Schaltkolbens (3), und der Kulissenhülse (7) abstützen, in eine hintere Endstellung beaufschlagt wird.

13. Spanneinrichtung nach einem der vorherigen Ansprüche, **dadurch gekennzeichnet, dass** eine Betätigungseinrichtung vorgesehen ist, die einen Kraftleitdorn (14) umfasst, welcher mit dem hinteren Ende des Schaltkolbens (3) in Eingriff bringbar ist, um diesen axial nach vorne zu drücken, und einen Taktkolben (15) aufweist, der an dem Kraftleitdorn (14) verschiebbar gehalten ist und mit der Kulissenhülse (7) axial in Eingriff bringbar ist, um diese axial nach vorne zu drücken, wenn sich der Schaltkolben (3) in seiner vorderen Betätigungsstellung befindet.

14. Spanneinrichtung nach Anspruch 13, **dadurch gekennzeichnet, dass** der Taktkolben (15) hülsenförmig ausgebildet ist und von dem Kraftleitdorn (14) durchgriffen wird.

15. Spanneinrichtung nach Anspruch 13 oder 14, **dadurch gekennzeichnet, dass** zwischen dem Taktkolben (15) und dem Kraftleitdorn (14) elastische Druckmittel (16) vorgesehen sind, welche den Taktkolben (15) gegenüber dem Kraftleitdorn (14) nach vorne drücken.

## Claims

1. Clamping device with
a base body (1), in which a hydraulic medium channel (2) is formed, which passes axially through the base body (1) between a front end face (1a) and a rear end face (1b),
a shift piston (3) which is inserted axially displaceably into the hydraulic medium channel (2), and
securing means to secure the shift piston (3) in a front actuating position,
**characterized in that**
the securing means comprise a securing sleeve (4) which is held axially fixed in a rear section of the hydraulic medium channel (2) but rotatable about the longitudinal axis (X) of the hydraulic medium channel (2), the securing sleeve (4) carrying at its front end two guide webs (4a, 4b) which are positioned on opposite sides of the longitudinal axis (X) and extend in the axial direction,
the shift piston (3) engages axially through the securing sleeve (4) and has a radially projecting guide shoulder (3b) which, in a guide position of the securing sleeve (4), is guided axially displaceably between the guide webs (4a, 4b) of the securing sleeve, the axial length of the guide webs (4a, 4b) being dimensioned such that, in the actuating position of the shift piston, the guide shoulder (3b) projects out of the front end of the securing sleeve (4), so that the securing sleeve (4) can be rotated, and
shifting means are associated with the securing sleeve (4) in order to turn the securing sleeve (4) in the actuating position of the shift piston (3) about the longitudinal axis (X) into a securing position in which the guide webs (4a, 4b) engage behind the guide shoulder (3b) of the shift piston (3) and thus secure the shift piston (3) in its actuating position.

2. Clamping device according to claim 1, **characterized in that** the guide shoulder (3b) is in the form of a flange having flattened portions (3c) on opposite sides of the longitudinal axis over which the shift piston (3) is guided between the guide webs (4a, 4b) of the securing sleeve (4), and **in that,** in the securing position of the securing sleeve (4), the guide webs (4a, 4b) engage behind the guide shoulder (3b) in the regions lying between the flattened portions (3c).

3. Clamping device according to claim 1 or 2, **characterized in that** the shifting means comprise a slide sleeve (7) which is guided on the shift piston (3) in a rotationally fixed but axially displaceable manner, the slide sleeve (7) being coupled to the securing sleeve (4) in this manner, **in that** a forward-directed axial movement of the slide sleeve (7) relative to the shift piston (3) is converted into a rotary movement of the securing sleeve (4) from its guide position into its securing position or vice versa, whereas a rearward-directed axial movement of the slide sleeve (7) does not lead to any rotary movement of the securing sleeve (4).

4. Clamping device according to claim 3, **characterized in that** at least one guide pin (10) is provided for coupling the slide sleeve (7) to the securing sleeve (4), said guide pin radially engaging through the wall of the securing sleeve (4) and engaging into a guide groove (13) provided in the outer wall of the slide sleeve (7).

5. Clamping device according to claim 4, **characterized in that** the guide groove (13) extends along the entire circumference of the slide sleeve (7) and comprises a plurality of circumferentially spaced axial guide groove portions (13a) extending in the axial direction and oblique guide groove portions (13b) therebetween, each connected to the rear end of an axial guide portion (13a) and the front end of an adjacent axial guide portion (13b) via rear and front connecting portions (13d, 13c), so that the guide groove (13) has a zigzag structure.

6. Clamping device according to claim 5, **characterized in that** the axial guide groove portions (13a) of the guide groove (13) have a groove depth decreasing from the associated rear connecting portion (13d) in the direction of the associated front connecting portion (13c) which increases in the transition to the front connecting portions (13c) with the formation of a step.

7. Clamping device according to claim 6, **characterized in that** the oblique guide groove portions (13b) have an at least substantially constant depth.

8. Clamping device according to claim 6, **characterized in that** the oblique guide groove portions (13b) have a groove depth decreasing from the associated front connecting portion (13c) in the direction of the associated rear connecting portion (13d) which increases in the transition to the rear connecting portions (13d) forming a step.

9. Clamping device according to one of claims 4 to 8, **characterized in that** two guide pins (10) are provided which are arranged on diametrically opposite sides of the securing sleeve (4) and are in engagement with the guide groove (13).

10. Clamping device according to claim 9, **characterized in that** the guide pins (10) are held axially displaceably in radial bores (11) of the securing sleeve (4) and are pressed inwards into engagement with the guide groove (13) by elastic means, in particular an elastic ring (12) which engages around the guide pins (10).

11. Clamping device according to one of claims 3 to 10, **characterized in that** the slide sleeve (7) has an internal hexagonal surface (8) on the inside and the section of the shift piston (3d) in engagement therewith is formed as external hexagonal surface.

12. Clamping device according to one of claims 3 to 11, **characterized in that** the slide sleeve (7) is urged into a rear end position by elastic resetting means (9) which are supported between the shift piston (3), in particular the guide shoulder (3b) of the shift piston (3), and the slide sleeve (7).

13. Clamping device according to one of the preceding claims, **characterized in that** an actuating device is provided which comprises a force guide mandrel (14) which can be engaged with the rear end of the shift piston (3) in order to press the latter axially forwards, and has a cadence piston (15) which is slidably held on the force guide mandrel (14) and can be axially engaged with the slide sleeve (7) in order to press the latter axially forwards when the shift piston (3) is in its front actuating position.

14. Clamping device according to claim 13, **characterized in that** the cadence piston (15) is sleeve-shaped and is penetrated by the force guide mandrel (14).

15. Clamping device according to claim 13 or 14, **characterized in that** elastic pressure means (16) are provided between the cadence piston (15) and the force guide mandrel (14), which pressure means press the cadence piston (15) forwards relative to the force guide mandrel (14).

## Revendications

1. Dispositif de serrage avec
un corps de base (1), dans lequel est formé un canal de moyen hydraulique (2) qui traverse axialement le corps de base (1) entre une face frontale avant (1a) et une face frontale arrière (1b),
un piston de commutation (3) qui est inséré de manière déplaçable axialement dans le canal de moyen hydraulique (2), et
moyens de fixation pour fixer le piston de commutation (3) en une position d'actionnement avant,
**caractérisé en ce que**
les moyens de fixation comprennent une douille de fixation (4) qui est fixée axialement dans une section arrière du canal de moyen hydraulique (2) mais qui peut tourner autour de l'axe longitudinal (X) du canal de moyen hydraulique (2), la douille de fixation (4) portant à son extrémité avant deux bandes de guidage (4a, 4b) qui sont placées sur des côtés opposés de l'axe longitudinal (X) et s'étendent dans le sens axial,
le piston de commutation (3) s'engage axialement à travers la douille de fixation (4) et présente un épaulement de guidage (3b) faisant saillie radialement qui, dans une position de guidage de la douille de fixation (4), est guidé mobile axialement entre les bandes de guidage (4a, 4b) de la douille de fixation, la longueur axiale des bandes de guidage (4a, 4b) étant dimensionnée de sorte que, en position d'actionnement du piston de commutation, l'épaulement de guidage (3b) dépasse par l'avant de la douille de fixation (4) pour que la douille de fixation (4) puisse être tournée, et
des moyens de commutation sont associés à la douille de fixation (4) pour faire tourner la douille de fixation (4) dans la position d'actionnement du piston de commutation (3) autour de l'axe longitudinal (X) en une position de fixation dans laquelle les bandes de guidage (4a, 4b) s'engagent derrière l'épaulement de guidage (3b) du piston de commutation (3) et ainsi fixent le piston de commutation (3) dans sa position d'actionnement.

2. Dispositif de serrage selon la revendication 1, **caractérisé en ce que** l'épaulement de guidage (3b) est réalisé sous la forme d'une bride qui présente des parties aplaties (3c) sur des côtés opposés de l'axe longitudinal, sur lesquelles le piston de commutation (3) est guidé entre les bandes de guidage (4a, 4b) de la douille de fixation (4), et **en ce que** les bandes de guidage (4a, 4b), en position de fixation de la douille de fixation (4), viennent en appui derrière l'épaulement de guidage (3b) dans les zones situés entre les parties aplaties (3c).

3. Dispositif de serrage selon la revendication 1 ou 2, **caractérisé en ce que** les moyens de commutation comprennent une douille coulissante (7) qui est guidé sur le piston de commutation (3) de manière fixe en rotation mais déplaçable axialement, la douille coulissante (7) étant ainsi couplé à la douille de fixation (4), **en ce qu'**un mouvement axial dirigé vers l'avant de la douille coulissante (7) par rapport au piston de commutation (3) est transformé en un mouvement rotatif de la douille de fixation (4) de sa position de guidage dans sa position de fixation ou vice versa, tandis qu'un mouvement axial dirigé vers l'arrière de la douille coulissante (7) ne provoque aucun mouvement rotatif de la douille de fixation (4).

4. Dispositif de serrage selon la revendication 3, **caractérisé en ce qu'il** est prévu au moins une broche de guidage (10) pour accoupler la douille coulissante (7) à la douille de fixation (4), ladite broche de guidage pénétrant en intégralité radialement dans la paroi de la douille de fixation (4) et engagement dans une rainure de guidage (13) prévue dans la paroi externe de la douille coulissante (7).

5. Dispositif de serrage selon la revendication 4, **caractérisé en ce que** la rainure de guidage (13) s'étend sur toute la circonférence de la douille coulissante (7) et ont une pluralité de parties de rainure de guidage axiale (13a) espacées les unes des autres dans la direction axiale et des parties de rainure de guidage obliques (13b) entre elles, chacun étant relié à l'extrémité arrière d'une partie de guidage axiale (13a) et à l'extrémité avant d'une partie de guidage axiale adjacente (13b) par l'intermédiaire de parties de liaison arrières et avantes (13d, 13c), de sorte que la rainure de guidage (13) obtient une structure zigzag.

6. Dispositif de serrage selon la revendication 5, **caractérisé en ce que** les parties de rainure de guidage axiale (13a) de la rainure de guidage (13) présentent une profondeur de rainure décroissant de la partie de liaison arrière associée (13d) en direction de la partie de liaison avante associée (13c) qui augmente dans la transition vers les parties de liaison avantes (13c) en formant une marche.

7. Dispositif de serrage selon la revendication 6, **caractérisé en ce que** les parties de rainure de guidage oblique (13b) ont une profondeur au moins sensiblement constante.

8. Dispositif de serrage selon la revendication 6, **caractérisé en ce que** la partie de rainure de guidage oblique (13b) présente une profondeur de rainure décroissante de la partie de liaison avante associée (13c) dans la direction de la partie de liaison arrière associée (13d) qui augmente dans la transition vers les parties de liaison arrières (13d) en formant une marche.

9. Dispositif de serrage selon l'une des revendications 4 à 8, **caractérisé en ce qu'**il est prévu deux goupilles de guidage (10) qui sont disposées sur des côtés diamétralement opposés de la douille de fixation (4) et qui sont en engagement avec la rainure de guidage (13).

10. Dispositif de serrage selon la revendication 9, **caractérisé en ce que** les goupilles de guidage (10) sont maintenues de manière déplaçable axialement dans des alésages radiaux (11) dans la douille de fixation (4) et sont pressées vers l'intérieur en engagement avec la rainure de guidage (13) par des moyens élastiques, en particulier une bague élastique (12) qui vient en prise autour des goupilles de guidage (10).

11. Dispositif de serrage selon l'une des revendications 3 à 10, **caractérisé en ce que** la douille coulissante (7) présente à l'intérieur une surface hexagonale interne (8) et la section du piston de commutation (3d) en engagement avec celle-ci est conçue comme une surface hexagonale externe.

12. Dispositif de serrage selon l'une des revendications 3 à 11, **caractérisé en ce que** la douille coulissante (7) est sollicitée dans une position finale arrière par des moyens de rappel élastiques (9) qui s'appuient entre le piston de commutation (3), en particulier l'épaulement de guidage (3b) du piston de commutation (3), et la douille coulissante (7).

13. Dispositif de serrage selon l'une des revendications précédentes, **caractérisé en ce qu'**il est prévu un dispositif d'actionnement qui comprend un mandrin de guidage de force (14) qui peut être mis en engagement avec l'extrémité arrière du piston de commutation (3) pour le pousser axialement vers l'avant, et qui présente un piston de tact (15) qui est maintenu par glissement sur le mandrin de guidage de force (14) et peut être mis en engagement axialement avec la douille coulissante (7) pour la faire avancer axialement, lorsque le piston de commutation (3) est dans sa position d'actionnement.

14. Dispositif de serrage selon la revendication 13, **caractérisé en ce que** le piston de tact (15) est en forme de douille et est pénétré par le mandrin de guidage de force (14).

15. Dispositif de serrage selon la revendication 13 ou 14, **caractérisé en ce que** des moyens de pression élastiques (16) sont prévus entre le piston de tact (15) et le mandrin de guidage de force (14), lesquels moyens de pression poussent le piston de tact (15) en avant par rapport au mandrin de guidage de force (14).
